# EUROPEAN PATENT SPECIFICATION

(11) **EP 4 620 313 B1**
(45) Date of publication and mention of the grant of the patent: **22.07.2026**
(21) Application number: 25163765.8
(22) Date of filing: 14.03.2025
(51) Int. Cl.: A23N 5/00

(54) **ROTARY CYLINDER SHELLING MACHINE WITH IMPROVED ADJUSTMENT SYSTEM**
ROTATIONSZYLINDERSCHÄLMASCHINE MIT VERBESSERTEM EINSTELLSYSTEM
MACHINE DE DÉCORTICAGE À CYLINDRE ROTATIF AVEC SYSTÈME DE RÉGLAGE AMÉLIORÉ

(30) Priority: 19.03.2024 IT 202400006031
(43) Date of publication of application: 24.09.2025
(73) Proprietor: CALA' S.R.L., 93100 Caltanissetta (IT)
(72) Inventor: CALA', Cataldo, 93017 San Cataldo (CL) (IT)
(74) Representative: Mar.Bre S.r.l.

(56) References cited:
- ES-U- 1 294 357
- ES-U- 1 295 749
- US-A- 2 500 675

## Description

The object of the present invention is a machine for shelling shell dried fruit, adapted to improve and optimise the shelling operation of said dried fruit.

In more detail, the present invention refers to a rotary cylinder shelling machine. Even more in detail, the invention relates to the regulation of the elements of the shelling machine, hereinafter referred to as "sheller", which have the task of breaking the wooden shells to extract the fruit contained therein, such as for example almonds, hazelnuts, walnuts or the like.

The current rotary cylinder shellers provide for shelling means comprising a rotating roller placed inside a cage, said cage providing for a substantially cylindrical shape and being also rotating, with a rotation direction opposite to that of the roller.

On the inside of the cage, bars are arranged and constrained, preferably with a square section, with one of the edges facing the rotation direction of the roller, so that the fruit to be shelled, during the rotation of the roller and the cage, wedge themselves among the grooves of the roller and the edges of the bars, resulting in the breaking of the shells.

The operation and means of said shellers shall not be further detailed, being them known to the man skilled in the art.

It is only specified that the breaking of the shell is given by the relative movement between the cage and the roller and by the cooperation of the sharp edges with the roller; in particular, it is obtained by the crushing of the shell between an edge of a bar and the surface of the roller.

In order to facilitate the understanding of the present invention, in the present description the shape of a generic dry fruit in a shell has been assimilated and equated to an ellipsoid (or an ovoid body).

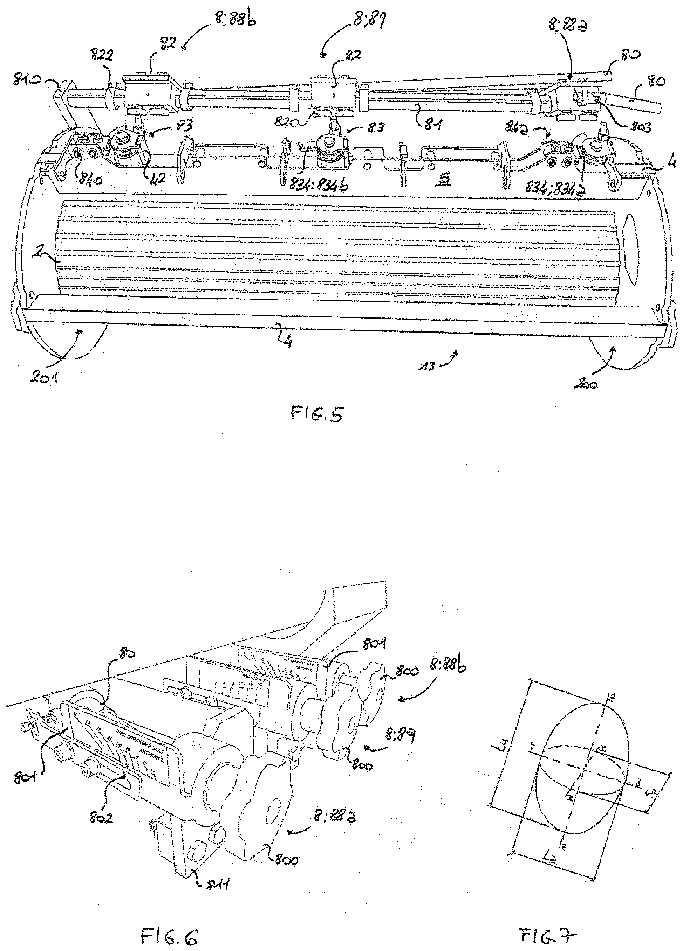

Figure 7 therefore represents an ellipsoidal shell definable through three dimensions, namely thickness *Sp,* width *La*, length *Lu,* according to three directions orthogonal to each other identified respectively by the axes *x-x, y-y* and *z-z* and with *Sp* ≤ *La* ≤ *Lu.*

By way of an example, in almonds, or similar fruit, there is markedly *Sp, < La < Lu;* in a walnut *Sp* ≈ *La < Lu;* in a substantially spherical hazelnut, *Sp* ≈ *La* ≈ *Lu.* One of the main problems of such type of sheller is that the regulation of one or more operating parameters of the same sheller requires stopping the machine, proceeding with the regulation and then restarting the sheller.

For example, in the shellers known to the state of the art, the distance among the elements that define the cage, which essentially acts as a sorting grid, may not be regulated and, once the grid has been chosen and made, such distance may no longer be modified and remains fixed.

Similarly, also in the shellers in the name of the same Applicant, although capable of processing and shelling mixed-size fruit, the distance between the elements of the grid is essentially fixed and is chosen considering the thickness *Sp* of the fruit to be shelled, preferably considering the thickness *Sp* of the fruit with a smaller size.

Generally, said distance may be chosen and defined in the design step, according to the dimensions or type of fruit to be shelled and/or the generally known and predictable ways in which the shell thereof breaks.

In order to shell different types of fruit or the same type of fruit but with different sizes with the same sheller, it is necessary to remove said grid and replace it with one more suitable for the dimensions of the fruit to be crushed.

Such replacement procedure is laborious and requires suspending the shelling activity and switching off the sheller.

It is therefore clear that such replacement procedure has a strong impact on the processing times and costs.

Furthermore, when processing mixed-size fruit, the difference in dimensions among the fruit to be shelled is significant and it is not so straightforward to identify the most suitable distance for the fruit to be processed and therefore choose the most efficient grid.

Such difference in dimensions is particularly evident in particularly dry years, during which the production of fruit with very different dimensions is accentuated. For example, with reference to almonds, the difference in thickness Sp between a large almond and a small almond is very strong and if a grid with an excessive distance is chosen, there will be a high percentage of small almonds passing through the grid without being crushed, thus increasing the percentage of unshelled fruit to be reintroduced into the sheller.

In such case, either the percentage of unshelled fruit is accepted or the sheller is stopped and the grid is replaced.

In both cases, the production efficiency is disadvantaged, especially in terms of time.

A shelling machine according to the prior art is disclosed in ES 1 295 749 U.

In order to solve such problem, the Applicant has designed a sheller that provides for a sorting grid that may be regulated according to the dimension of the fruit to be shelled.

Such regulation, even if it does not require dismantling the grid or removing/replacing the parts thereof, still requires a machine downtime, during which, with the sheller switched off, the regulation of the grid is implemented.

It is therefore clear that, even if such regulation is still advantageous, as it does not require dismantling the grid or parts thereof, it is still necessary to switch off the sheller, temporarily suspending the shelling operation.

It should be noted that similar problems concern the possible regulation of the distance between roller and bars, if the sheller provides for such possible regulation.

Currently, in fact, even the regulation of such parameter requires the machine downtime.

Similarly, even in the shellers in the name of the same Applicant, although capable of processing and shelling mixed-size fruit, the regulation of the distance between the roller and the bars requires the sheller to be switched off.

The object of the present invention is to obviate such kind of drawbacks, by providing a cylinder shelling machine capable of implementing the regulation of at least one operating parameter according to the size of the fruit to be shelled, without requiring the machine downtime.

A further object of the present invention, at least for one or more executive variants, is to provide a cylinder shelling machine equipped with at least one system for regulating the distance between the roller and the breaking device that does not require the machine downtime.

A further object of the present invention, at least for one or more executive variants, is to provide a cylinder shelling machine equipped with at least one system for regulating the sorting grid that does not require the machine downtime. A further object of the present invention, at least for one or more executive variants, is to provide a cylinder shelling machine equipped with at least one system for regulating the distance between the roller and the breaking device and/or the sorting grid, without the need for the machine downtime.

This and other objects, which shall appear clearly hereinafter, are achieved with a shelling machine and relative kinematic means according to claim 1.

Other objects may also be achieved by means of the additional features of the dependent claims.

Further features of the present invention shall be better highlighted by the following description of a preferred embodiment, according to the patent claims and illustrated, purely by way of a non-limiting example, in the accompanying drawing tables, wherein:
- Figure 1 shows a perspective view of a known shelling machine patented in the name of the same Applicant;
- Figure 2 shows a side view of the shelling machine of Figure 1;

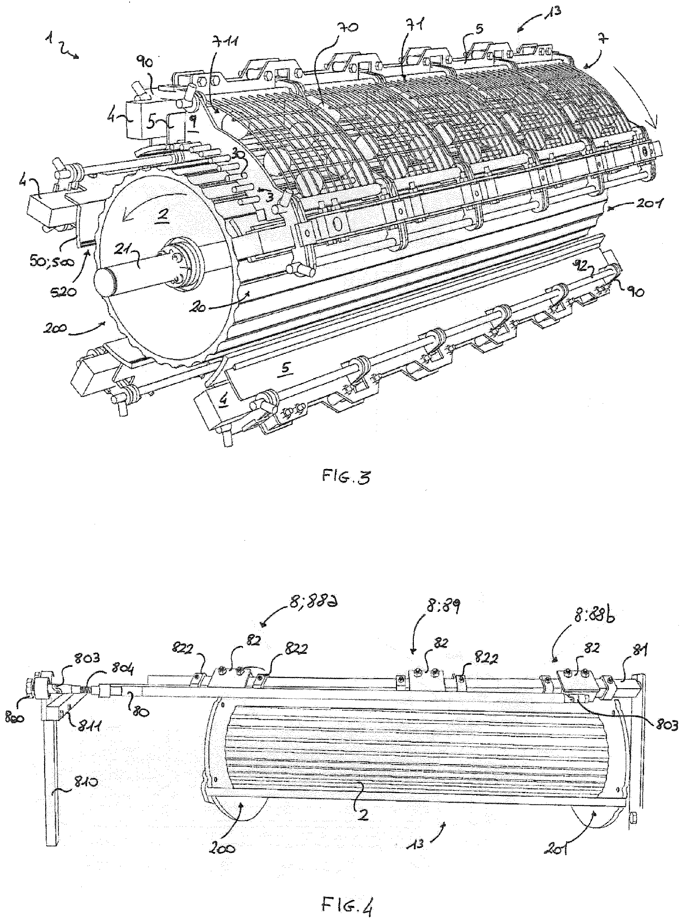

- Figure 3 shows a perspective view of the shelling assembly of Figure 1;
- Figure 4 shows a side view of the regulation system according to the present invention in accordance with a possible executive variant;
- Figure. 5 shows a perspective view of the regulation system of Figure 4;
- Figure 6 shows a perspective view of the operating means of the regulation system of Figure 4;
- Figure 7 shows a simplified and schematic view of a generic shell dried fruit of substantially ovoid shape and similar to that of an ellipsoid;
- Figure 8 shows a perspective view of a cam of the regulation system in accordance with a first possible executive variant;
- Figure 9 shows a side view of the regulation system in accordance with to a first possible executive variant;
- Figure 10 shows a perspective view of the regulation system in accordance with a first possible executive variant;
- Figure 11 shows a perspective view of the regulation system in accordance with a second possible executive variant;
- Figure 12 shows a detail of Figure 11;
- Figure 13 shows a perspective view of a cam of the regulation system in accordance with a second possible executive variant;

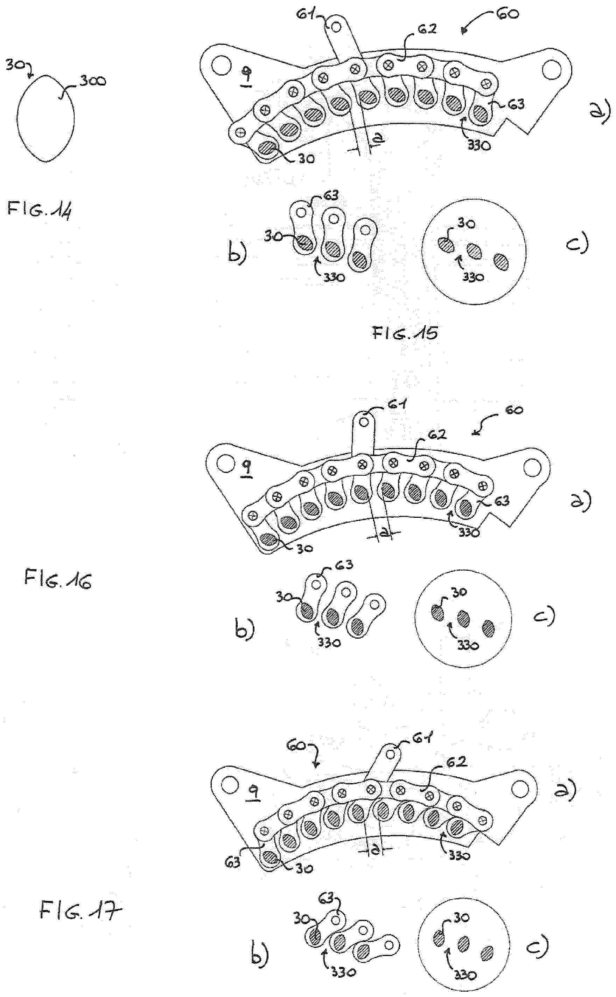

- Figure 14 shows a front view, in accordance with a possible executive variant, of a rod-like element having an elliptical cross-section;
- Figures 15a, 15b and 15c show the sorting grid with the exit sections thereof in the minimum amplitude position;
- Figures 16a, 16b and 16c show the sorting grid with the exit sections thereof in an intermediate position;
- Figures 17a, 17b and 17c show the sorting grid with the exit sections thereof in the maximum amplitude position.

The features of a preferred variant of the shelling machine for shell dried fruit and the related kinematic means are now described, using the references contained in the figures.

The shelling machine is herein to be understood as a shell-breaking machine capable of at least breaking the wooden shells of the fruit to be shelled.

It should be noted that the above figures, although schematic, reproduce the elements of the invention according to proportions between the spatial dimensions and orientations thereof that are compatible with a possible executive embodiment.

It should also be noted that any dimensional and spatial term (such as "lower", "upper", "inner", "outer", "front", "rear", "vertical", "horizontal" and the like) possibly used below refers, unless otherwise indicated, to the position according to which the object of the invention shown in the drawings is arranged at certain moments in the operating cycle of the shelling machine.

For the sake of brevity and clarity of description, hereinafter in the description reference shall be made exclusively to an almond sheller, although it should be understood that the teachings of the present invention are well suited for any type of shell dried fruit, such as, for example, walnuts, hazelnuts, pine nuts, pistachios or the like.

Mass of product is herein to be understood as the set of fragments of shell and almond fruit obtained via a shelling operation and which, generally, is subjected to one or more subsequent separation and selection processes to separate the fruit from the shells and obtain clean fruit free of inedible foreign bodies.

As clearly shown in the accompanying figures, 1 indicates, as a whole, the shelling machine according to the present invention, hereinafter referred to as only sheller 1, for clarity of description.

The sheller 1, where not expressly specified, may comprise a generic sheller such as, for example, one of those object of previous patents and/or patent applications in the name of the same Applicant to which reference is made for further details; what is found in this description is the fact that the regulation system according to the present invention may be advantageously integrated and used on rotary shellers already known and of which a detailed description will not be given here as they are not the object of the present invention.

Said sheller 1 may comprise at least a support frame 10, at least a shelling assembly 13 which may comprise at least a roller 2, at least a shell breaking device 5 and at least a sorting grid 3, said shelling assembly 13 having substantially the task of breaking the shells of the fruit to be shelled.

As it clearly appears hereinafter in the description, the roller 2 and the breaking device 5 cooperate in order to break the shells, while said sorting grid 3 retains the fruit to be shelled inside the shelling assembly 13 and at the same time allows the evacuation of the mass of product.

Preferably, said sheller 1 may be provided with a loading hopper 11 capable of receiving and accommodating the fruit to be shelled.

Said hopper 11 may preferably be provided with at least one screw means 110 adapted to move the fruit to be shelled towards at least one conveyor 112 or directly towards the inlet section of the shelling assembly 13 (in essence towards the roller 2).

The roller 2 may be substantially cylindrical in shape and may be externally provided with a plurality of longitudinal grooves 20 that preferably develop along the entire length of the said roller 2.

Conveying zone 520, which will be explored in more detail later, it to be understood as the space defined/comprised between the roller 2 and the breaking device 5 dedicated to the conveying and subsequent breaking of the fruit to be shelled.

The roller 2 is preferably keyed or equipped with a shaft 21 suitably rotated with respect to the longitudinal axis thereof by known driving means 22.

In general, the following may be identified of the roller 2:
- a first end 200, herein referred to as "proximal end" 200, which is arranged in proximity to the screw 110 or the conveyor 112;
- a second end 201, herein referred to as "distal end" 201, which is arranged opposite said proximal end 200.

The sorting grid 3, hereinafter referred to as only grid 3 for ease of description, may be defined by means of a plurality of rod-like elements 30 arranged around the roller 2, preferably at regular intervals so as to be parallel and equidistant from each other and therefore define the exit sections 330.

Said rod-like elements 30 preferably provide for a longitudinal development substantially similar to that of the said roller 2.

The grid 3 therefore has the task of:
- retaining the fruit to be shelled/crushed inside the shelling assembly 13, preventing them from exiting the shelling assembly 13 before being crushed; and/or
- allows the exit of the shelled fruit and broken shells through said exit sections 330.

For such purpose, the distance between two consecutive rod-like elements 30 must be such as not to allow the passage of the fruit still to be shelled and at the same time allow the exit of the crushed mass of product.

In general, such distance, which defines the width/dimension of each exit section 330 of the grid 3, may be defined as a function of the dimensions or type of fruit to be shelled and/or the generally known and predictable ways in which the shell thereof breaks (for example, number, dimension and/or shape of the fragments into which the shell breaks).

For example, with reference to figure 7, such distance must preferably be less than the thickness *Sp* of the fruit to be shelled.

According to a preferred variant, said grid 3 may be rotated with respect to the longitudinal axis thereof by suitable driving means 33.

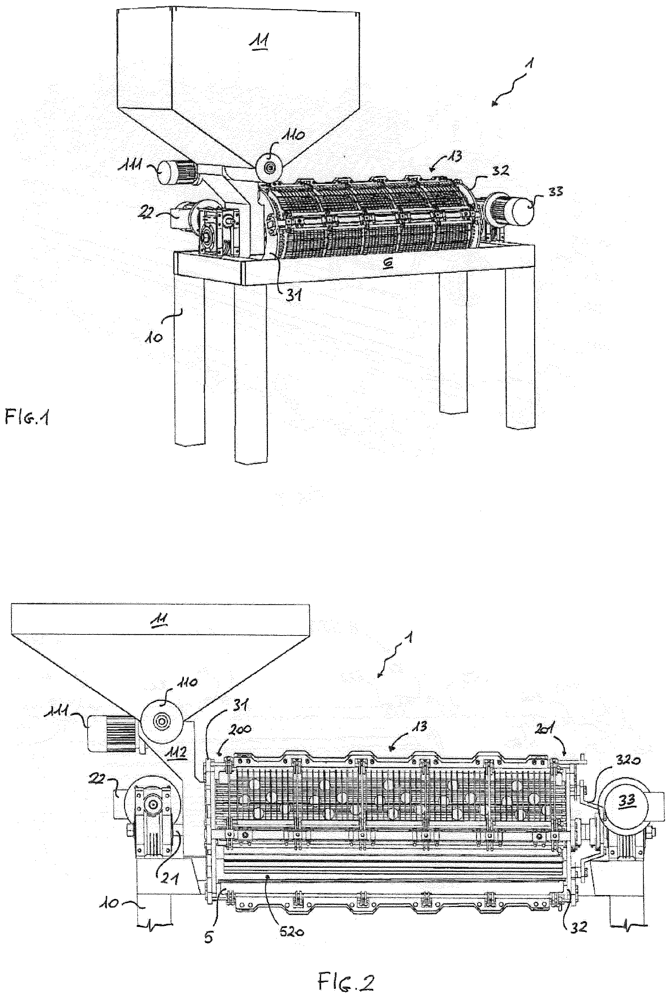

According to a possible executive variant, said driving means 111, 22 and/or 33 may comprise electric motors, gear motors or the like, preferably of the type that allows the regulation of the number of revolutions and/or of the rotation direction. Said grid 3 may be suitably fixed to the support frame 10 by means of a first 31 and a second 32 fixing flange arranged in proximity to the end of the roller 2, for example as visible in figure 2, in which:
- the first flange 31 is placed in proximity to the proximal end 200 of the roller 2 and is keyed in an idle manner, for example by means of bearing means or the like, on the shaft 21 of the roller 2 so that it may rotate independently with respect to the same shaft 21;
- the second flange 32 is positioned in proximity to the distal end 201 of the roller 2 and is keyed or connected by means of one or more return brackets 320 on a shaft connected to said actuation means 33, said shaft being independent of the shaft 21; this allows the roller 2 and the grid 3 to rotate autonomously, defining and regulating the rotation speed and direction (clockwise/anticlockwise) for each component.

In essence, the roller 2 is arranged between said first 31 and second 32 flange in such a way that the shaft 21 thereof is integral to said first 31 and second 32 flange. In general, each breaking device 5 may be rotated by suitable driving means so as to be able to rotate about the roller 2.

Preferably, each breaking device 5 provided for by the sheller 1 is arranged and appropriately constrained to said first 31 and second 32 flange and rotates mutually with the second flange 32.

As partially anticipated, the sheller 1 may comprise at least one breaking device 5, preferably at least two breaking devices 5.

Each breaking device 5 cooperates with the roller 2 in order to crush the fruit shell, and is equipped with a free end 50, projecting towards the roller 2, which acts as an abutment surface for crushing the fruit shell.

In essence, during the rotation of the breaking device 5 and the roller 2, the almond is pressed and crushed between the roller 2 and the breaking device 5; preferably between a groove 20 of the roller 2 and the free end 50 of the breaking device 5.

In accordance with a possible preferred variant of the invention, each breaking device 5 may be provided with at least one abutment element 500 capable of acting as a guide surface and, at least in a portion thereof, as an abutment for crushing said fruit to be shelled.

Said abutment element 500 may be advantageously constrained or defined in proximity to said free end 50 and has the purpose of improving the crushing of the fruit even in case of imperfect orientation of the same fruit.

The abutment element 500 may be made in the form of a plate or the like and may be provided with a first end 501 which defines, in cooperation with the roller 2, substantially the inlet section of the conveying zone 520, and a second end 502 which defines, in cooperation with the roller 2, substantially the breaking and exit section of said conveying zone 520.

According to a preferred variant, the sheller 1 may provide for a sorting grid 3 that may be regulated according to the dimension of the fruit to be shelled.

The sheller 1 provides for adjusting the width "*a*" of the exit sections 330 of the grid 3, i.e. the distance between the rod-like elements 30 of said grid 3, so as to be able to easily adapt it, for example, to the thickness Sp of the smallest-sized fruit. As shall be seen, such regulation may be carried out quickly and without requiring dismantling the grid 3 or the removal/replacement of parts thereof.

As anticipated, said grid 3 may be defined by a plurality of rod-like elements 30 arranged about the roller 2, preferably at regular intervals so as to be parallel and equidistant from each other and therefore define exit sections 330 that allow the passage and evacuation of the mass of product from said sheller 1.

Said rod-like elements 30 may have at least one portion 300 with an elliptical, rhomboidal, rectangular, polygonal cross-section or, in general, according to any shape capable of having, preferably, an axis of symmetry greater than the other.

Nothing prevents said rod-like elements 300 from being entirely made with an elliptical, rhomboidal, rectangular, polygonal or similar cross-section.

Each rod-like element 30 is capable of cooperating with a bracket 9, in particular with a through hole of said bracket 9 in which it is inserted, so as to be able to rotate with respect to the longitudinal axis thereof.

For such purpose, said through hole is shaped and sized so that each rod-like element 30, with respect to the longitudinal axis thereof, may rotate inside it without interference.

Each rod-like element 30, therefore, is capable of rotating with respect to the longitudinal axis thereof, such rotation allowing the spatial orientation of each rod-like element 30 to be modified and regulated, consequently modifying the transverse width "*a*" of each exit section 330.

According to the variant now described, the distance between two adjacent rod-like elements 30 remains fixed, while it is possible to regulate the transverse width "*a*" of each exit section 330 by modifying/regulating the spatial orientation of each rod-like element 30, i.e. the spatial orientation of the axes of symmetry of the cross-section of the portion 300.

Two adjacent and parallel to each other rod-like elements 30 with equal spatial orientation, i.e. with the axes of symmetry arranged with the same orientation should be considered; by modifying such spatial orientation, due to the shape of the cross-section of the portion 300, the distance separating the perimeter edges or the surfaces of said rod-like elements 30 is modified, approaching or moving away said perimeter edges.

It should be noted that in order to have and maintain homogeneity of amplitude among the exit sections 330 defined by all the rod-like elements 30 installed on a bracket 9, the rotation of said rod-like elements 30 is substantially of the same extent.

According to a possible executive variant, reported by way of a non-limiting example, said rotation may be implemented, for example, by means of at least one appropriate kinematics 60 that allows the width "*a*" of the exit sections 330 to be regulated.

Said kinematics 60 is able to transform and convert the possible translation of at least one control lever 61 into a rotation of said rod-like elements 30, said kinematics 60 being able to comprise at least:
- at least one control lever 61 capable of being operated by the regulation system described shortly according to the present invention;
- a plurality of connecting rods 62 arranged in proximity/adjacent to one another and constrained to each other so as to form a continuous mesh connection;
- a plurality of cranks 63, each crank 63 being suitably constrained at one end to a rod-like element 30 and at the other end to a connecting rod 62.

Nothing prevents said kinematics 60 from using components other than those described herein to ensure the rotation of the rod-like elements 30, such as for example gears, tie-rods with spherical joints or flexible tie-rods, thereby without departing from the scope of the present invention.

Said kinematics 60 may substantially provide for a number of cranks 63 equal to the number of rod-like elements 30, while each connecting rod 62 is capable of cooperating with at least one crank 63 so as to control the rotation thereof and consequently regulate the spatial orientation of the rod-like elements 30.

In essence, the connecting rods 62 are operated by means of the control lever 61 and transfer the movement to the cranks 63, finally rotating the rod-like elements 30.

It should be noted that by operating the control lever 61, and therefore the kinematics 60, all the rod-like elements 30 are capable of rotating and that the rotation angle, determined by the extent of the movement of said control lever 61, is substantially the same for all said rod-like elements 30.

According to a possible executive variant, the grid 3 may advantageously be divided into sections independent of each other.

Preferably, the grid 3 may be divided into longitudinal sections that extend longitudinally for the entire longitudinal development of the sheller 1, while they transversally extend substantially from a crosspiece 4 to the other following a curvilinear profile that adapts to the geometry of the shelling assembly 13.

Each longitudinal section may be defined by at least one bracket 9, appropriately shaped so as to extend substantially from one crosspiece 4 to the other following and adapting to the curvilinear profile of the sheller 1, said at least one bracket 9 being constrainable to said crosspiece 4 by means of appropriate supports 90.

Considering a transverse section of the sheller 1, it is possible to provide, always with reference to the transverse plane, for a number of brackets 9 equal to the number of crosspieces 4.

Each bracket 9 may be provided with a plurality of through holes, preferably arranged in proximity to the most close portion thereof to the roller 2, for the passage of the rod-like elements 30 of the grid 3.

Furthermore, each bracket 9 may be provided with two protrusions, each positioned in proximity to the portion thereof furthest from the roller 2, each provided with a through hole or the like for the passage of respective locking rods 92.

Each bracket 9 may preferably act at least as a support for the grid 3, in particular for the rod-like elements 30 and the locking rods 92.

Each support 90 may be provided with one or more through holes, and possibly threaded, through which it may be fixed to a respective crosspiece 4, for example by means of tightening means 910 such as screws, bolts or the like.

According to a preferred variant, the sheller 1 is characterised in that it comprises at least one regulation system 8 of at least one operating parameter of said sheller 1.

Operating parameter is herein to be understood as a parameter of the sheller 1, the regulation whereof is mainly a function of the dimensions/size of the fruit to be shelled, such as for example the distance between roller 2 and breaking device 5, which may be correlated to the width *Lp* or the thickness *Sp* of the fruit, or the width "a" of the exit sections 330 of the grid 3, which may be correlated to the thickness *Sp* of the fruit.

For such purpose, the breaking device 5 may be shaped in the form of a "C", "U" or the like so as to have a base 50, which essentially acts as a free end 50 and as a connection for the possible abutment element 500, and a first 51 and second 52 wing, opposite and substantially parallel to each other, as well as substantially orthogonal to said base 50.

Among said wings 51, 52 and the base 50, a cavity 53 is thus defined which acts as a seat to accommodate at least one crosspiece 4 appropriately fixed to the first 31 and second 32 flange so as to be integral to both.

Preferably, said cavity 53 has dimensions capable of receiving and housing the cross-section of said crosspiece 4.

The crosspiece 4 acts as a support for said at least one breaking device 5, making it integral to said flanges 31 and 32.

The crosspiece 4 may comprise a tubular element or a profile or the like and transmits the rotary movement of the second flange 32, set in rotation by the driving means 33, to the first flange 31, keyed in an idle manner with respect to the shaft 21 of the roller 2.

The crosspiece 4, and consequently the breaking device 5 constrained thereto, moves at the same speed and the same rotation direction as said second flange 32, to which it is, as mentioned, integral.

Preferably, the coupling between the cavity 53 and the crosspiece 4 must be sufficiently loose so as to allow the sliding of the breaking device 5 with respect to said crosspiece 4, but at the same time not so excessively loose so as to avoid vibrations, oscillations or unwanted movements of the breaking device 5.

Furthermore, the number of breaking devices 5 and of the relative crosspieces 4 may be varied according to the dimensions of the roller 2, and/or to the dimensions and/or type of the fruit to be shelled, and/or to the rotation speed of the roller 2 and/or of the same breaking device 5.

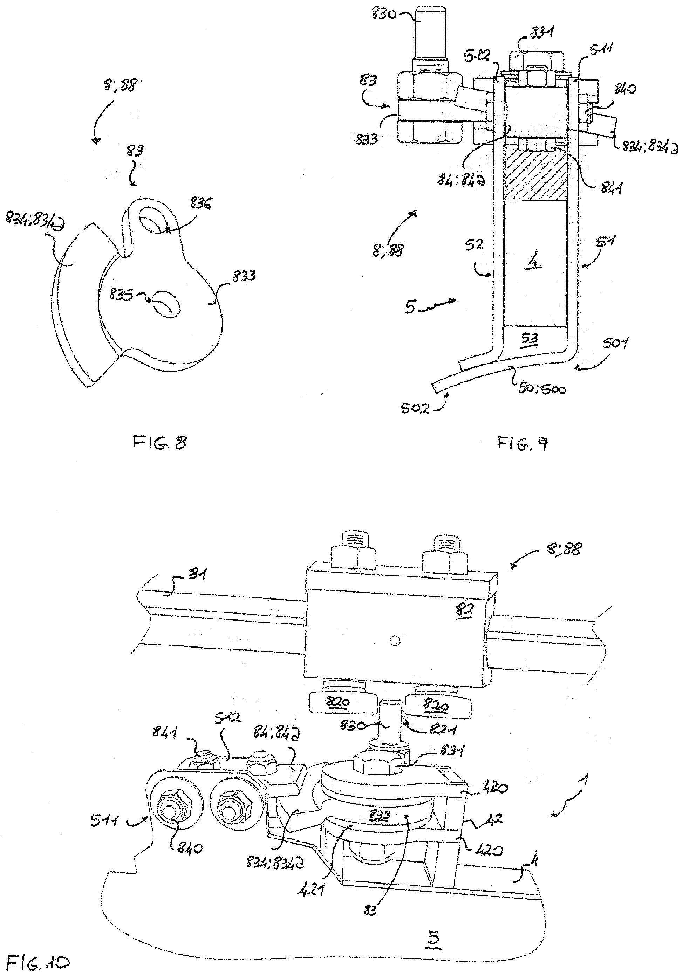

According to a possible executive variant, said regulation system 8 may comprise:
- at least one control bar 80, preferably operated by at least one operating means 800 that may be made in the form of a knob or the like;
- at least one support shaft 81 arranged externally to said shelling assembly 13 and suitably constrained to the frame 10 so as to be fixed and irremovable;
- at least one cursor 82 slidingly fixed to said support shaft 81 and capable of translating along said shaft 81 under the action of said control bar 80;
- at least one cam 83 suitably fixed and integral to said crosspiece 4, preferably on the upper surface of said crosspiece 4 (Figure 9);
- at least one actuator 84 capable of transmitting the movement imparted by said cam 83 to an element of the sheller 1 which operates substantially as a function of said operating parameter, preferably to an element/component of the shelling assembly 13.

In general, said element/component of the shelling assembly 13 may comprise the grid 3 and/or the breaking device 5.

The control bar 80, preferably made by means of a rod-like, tubular or similar element, extends between:
- the operating means 800, to which it is suitably connected, for example by means of a hinge joint 803 and a threaded rod 804 or the like, by means of a first end so as to be able to cooperate therewith, and
- the at least one cursor 82, to which it is suitably connected by means of a second end, for example by means of a hinge joint 803 or the like.

Preferably, a control bar 80 is provided for each cursor 82.

The threaded bar 804 essentially acts as a worm screw so that the cooperation of the parts transforms the rotary movement of the operating means 800 into a translational movement for said control bar 80 and therefore for said cursor 82.

The hinge joints 803 allow and ensure a smooth and effective drive of the control bar 80, compensating, for example, possible misalignments between cursor 82 and threaded bar 804.

It is clear that by changing the rotation direction (clockwise/anticlockwise) with which the operating means 800 is driven, the translation direction of the cursor 82 is changed.

Preferably, in order to facilitate the registration and regulation operation, the regulation system 8, preferably the operating means 800, may be provided with a Vernier or a graduated scale 801 or the like.

According to a preferred variant, said control bar 80 is equipped with an indicator 802 capable of translating with the control bar 80 and moving along said graduated scale 801, for example by means of a guide 818 or similar means, so as to indicate the extent of the regulation being set or of the one set/in use.

According to a possible executive variant, it is possible to provide for limit switches 822 adapted to identify the regulation stroke/translation allowed to said cursor 82, said limit switches 822 respectively defining the maximum and minimum regulation allowed to each cursor 82 by the regulation system 8.

The support shaft 81 preferably provides for a longitudinal development substantially similar to that of the said roller 2 and is advantageously fixed to the frame 10, in an irremovable manner, by means of support brackets 810 to which the operating means 800 may be constrained, for example by means of a support plate 811.

As anticipated, at least one cursor 82 is slidingly installed on said support shaft 81.

The cursor 82 is shaped and made so as to be able to:
- be coupled/constrained to said support shaft 81 so as to be able to translate/slide along the same support shaft 81;
- be coupled with said control bar 80, said control bar 80 imparting and controlling the translation of the said cursor 82;
- act as a support for at least two wheels 820, preferably arranged on the side/face of the cursor 82 facing the shelling assembly 13.

Said wheels 820 may comprise bearings, idle wheels or the like and are placed side by side and suitably spaced so as to define an opening 821 in which a pin 830 suitably arranged and fixed to said cam 83 is capable of transiting.

**In** particular, the pin 830 is capable of:
- cooperating with at least one wheel 820, crossing the opening 821, during the regulation procedure;
- crossing said opening 821 without interference, once the regulation has been completed.

**In** essence, the position of the wheels 820 and the transverse development of the opening 821 that they define are such as to allow the passage of the pin 830 inside the said opening 821:
- with interference with a wheel 820, so that the pin 830 hits it, implementing the cooperation among the parts, i.e., generating a thrust of a wheel 820 on the pin 830, during the regulation procedure;
- without interference, i.e. without the pin 830 hitting one of the wheels 820, at the end of the regulation procedure.

It should be noted that:
- in the design and/or construction step, the distance among the wheels 820 may be chosen and regulated, for example, according to the type of application or to the type or dimensions of the pin 830;
- the wheel 820 that from time to time cooperates with the pin 830 depends on the sliding direction of the cursor 82 along the support shaft 81.

It should be noted that both the control bar 80 and the support shaft 81, as well as the cursor 82, are substantially stationary and do not rotate together with the shelling assembly 13, and that said cursor 82 is allowed to slide only along the support shaft 81; said components are therefore hereinafter referred to as "fixed group".

The cam 83 is shaped and made so as to be able to:
- be constrained to the crosspiece 4 via a support 42 and a locking means 831 capable of preventing the translation thereof, but allowing the rotation thereof;
- act as a support for said pin 830;
- command the movement of the said actuator 84 in response to the movement imparted by the cursor 82 via the control bar 80.

According to a preferred variant, the following is possible to identify of said cam 83:
- a first portion 833 provided with a through hole 835, preferably arranged centrally, for the passage of the locking means 831, and of a preferably through or threaded hole 836, made on an appendix of said first portion 833 and intended for fixing the pin 830, said first portion 833 being intended to cooperate with the cursor 82 and to receive the command thereof;
- a second portion 834, integral to and projecting from said first portion 833, intended to cooperate with said actuator 84 so as to transmit to it the command received from said cursor 82.

Said support 42 is integral to said crosspiece 4 and provided with two arms 420, substantially parallel to each other, between which said cam 83 is arranged and fixed by means of the aforementioned locking means 831.

It should be noted that the coupling between support 42 and cam 83 prevents said cam 83 from translating, while allowing it to rotate with respect to the locking means 831 by means of the through hole 835.

According to a preferred variant, between said cam 83 and the support 42, in particular between the first portion 833 and the arms 420, there are arranged interference elements 421 capable of hindering/braking/slowing down the rotation of the cam 83.

In essence, said interference elements 421 act as a brake for the movement of the cam 83, preventing it, according to the amount/strength of the thrust imparted to the pin 830 by the cooperation/interference with the wheels 820, from rotating excessively and uncontrollably.

It is specified that the cam 83 and the actuator 84 rotate together with the shelling assembly 13, but are fixed in an immovable manner to said crosspiece 4, said components being hereinafter referred to as "rotating group".

As anticipated, said regulation system 8 may regulate at least one operating parameter of the sheller 1.

Preferably, according to a possible executive variant, the sheller 1 may comprise:
- at least a regulation system 8 dedicated to regulate the distance between the roller 2 and the breaking device 5, preferably the distance between the abutment element 500 and the roller 2, and herein indicated as regulation system 88 of the conveying zone 520; and/or
- at least a regulation system 8, herein indicated as regulation system 89 of the grid 3, dedicated to regulate the width "a" of the exit sections 330 of the grid 3, so as to be able to easily adapt it, for example, to the thickness Sp of the smallest-sized fruit.

Said regulation systems 88 and 89 substantially provide for the same components described with reference to the generic regulation system 8, they differ only in the geometry of the second portion 834 of the cam 83 and in the type of actuator 84 adopted.

As it shall be illustrated shortly, such differences lead to a different cooperation among the parts, obtaining a different conversion of the command movement imparted by the operating means 800, where:
- the regulation system 88 of the conveying zone 520 converts such movement into a substantially vertical translation;
- the regulation system 89 of the grid 3 converts such movement into a substantially horizontal translation.

According to different executive variants, it is possible to provide for each regulation system 8, 88, 89:
- at least one fixed group for each operating parameter to be regulated;
- at least one rotating group for each breaking device 5 provided by the sheller 1, in case of a regulation system 88 of the conveying zone 520, and/or for each kinematics 60, in case of regulation system 89 of the grid 3.

According to a preferred variant, the cursors 82 of the regulation systems 88 and of the regulation systems 89 provided for and installed on the sheller 1, may be advantageously arranged on a single support shaft 81 and controlled by respective and independent control bars 80 operated by respective operating means 800.

When the regulation system 8 is responsible for regulating the distance between roller 2 and breaking device 5 (Figures 8, 9, 10), i.e., regulating the cross-section of the conveying zone 520, it therefore acts as a regulation system 88 of the conveying zone 520 where:
- the cam 83 provides for a second portion 834, herein indicated with 834a, shaped in the form of a helix, preferably a section of a helix, or a curved section, inclined rectilinear or the like, while
- said actuator 84, herein indicated with 84a, preferably comprises a bracket 84a appropriately constrained to the breaking device 5.

Said bracket 84a is preferably shaped in the form of a "C" or a "U" or the like so as to provide for two arms between which a cavity is defined in which at least locking means 840 and said second portion 834a are housed.

According to a possible executive variant, said bracket 84a is fixed/tightened to appendices of the wings 51 and 52 of the breaking device 5 by means of appropriate locking means 840 such as screws, bolts or the like inserted into respective through holes provided on said appendices.

For such purpose, said first wing 51 is preferably provided with an appendix 511 equipped with at least one through hole or the like arranged so as to correspond/match/align with at least one respective through hole or the like provided on an appendix 512 of the wing 52.

Said bracket 84a is inserted between said appendices 511 and 512 so that the locking means 840 are housed inside the bracket 84a and is locked by means of appropriate fastening means 841 so as to remain in position.

In essence, the bracket 84a is "tightened" between said appendices 511 and 512 by the tightening of the locking means 840 and therefore integral to the breaking device 5 and said tightening means 841 cooperate with said locking means 840 avoiding possible translations thereof.

Said bracket 84a is capable of accommodating, at least partially, said second portion 834a of the cam 83, said second portion 834a being able to insist either on the upper arm or on the lower arm of the bracket 84a, according to the rotation movement of the cam 83, so as to push downwards or pull upwards the breaking device 5 (Figure 10).

Once the components of the regulation system 88 of the conveying zone 520 have been arranged on the crosspiece 4 and on the breaking device 5, there is provided that:
- the cam 83 is integral with the crosspiece 4 via the support 42;
- the first portion 833 of the cam 83 may rotate under the action of the wheels 820;
- the second portion 834a of the cam 83 is housed, at least partially, in said bracket 84a;
- the breaking device 5 is free to translate/slide with respect to the crosspiece 4, by virtue of the loose coupling thereof, so as to approach to or move away from said roller 2.

By acting on the first portion 833 of the cam 83, said cam 83 rotates and with it the second portion 834a which, according to the rotation direction, acts:
- on the upper arm of the bracket 84a, so that the breaking device 5 translates moving away from the roller 2, thus increasing the overall cross-section of the conveying zone 520; or
- on the lower arm of the bracket 84a, so that the breaking device 5 translates approaching the roller 2, thus reducing the overall cross-section of the conveying zone 520;
or vice versa depending on the orientation of the helix, right-handed or left-handed, or of the inclined section of the second portion 834a.

According to a possible executive variant, the sheller 1 may provide for the use of at least two regulation systems 88 in order to regulate more accurately the distance between the roller 2 and the breaking device 5.

In such case, said at least two regulation systems 88 of the conveying zone 520 are substantially identical to each other, but preferably have the respective cursors 82 respectively arranged in proximity to the opposite ends of the support shaft 81.

Preferably, it is possible to identify:
- at least a first regulation system 88a, herein referred to as "proximal regulation system 88a", the components whereof are placed on the support shaft 81 or on the crosspiece 4 in proximity to or at the proximal end 200 of the roller 2;
- at least a second regulation system 88b, herein referred to as "distal regulation system 88b", the components whereof are placed on the support shaft 81 or on the crosspiece 4 in proximity to or at the distal end 201 of the roller 2.

It should be noted that by acting on all the regulation systems 88 provided by the sheller 1, preferably with the same regulation degree applied to all of said regulation systems 88, it is possible to uniformly approach/move away the breaking device 5 to/from the roller 2.

Regulation degree means the extent of screwing/unscrewing that the respective operating means 800 undergo from a generic starting position considered as reference.

Such regulation of the distance enables the shelling assembly 13, and the relative conveying zone 520, to be adapted to different types of dried fruit or to the dimensions of the same fruit.

According to a preferred variant, said conveying zone 520 may provide for, in addition or as an alternative to the regulation of the cross-section thereof illustrated above, a variable and adjustable section also along the longitudinal section thereof, or along the longitudinal development of the sheller 1 and/or of the relative shelling assembly 13 and/or of the roller 2.

According to the requirements, therefore, by acting on the regulation systems 88 of the conveying zone 520 provided for by the sheller 1, the conveying zone 520 may provide for a constant, increasing or decreasing longitudinal section.

As mentioned, with reference to the variant illustrated by way of a non-limiting example in the accompanying figures, the sheller 1 may be provided with a proximal 88a and distal 88b regulation system.

When said proximal 88a and distal 88b regulation systems are provided, the longitudinal section of the conveying zone 520 may be regulated and modified so as to be:
- constant from the proximal end 200 to the distal end 201 of the roller 2, i.e. the longitudinal axis of the abutment element 500 is substantially parallel to the longitudinal axis of the roller 2; in such case the proximal 88a and distal 88b regulation systems may be operated with the same regulation degree;
- increasing from the proximal end 200 to the distal end 201 of the roller 2, i.e. the longitudinal axis of the abutment element 500 is substantially divergent from the proximal 200 to the distal 201 end with respect to the longitudinal axis of the said roller 2;
- decreasing from the proximal 200 to the distal 201 end of the roller 2, i.e. the longitudinal axis of the abutment element 500 is substantially convergent from the proximal 200 to the distal 201 end with respect to the longitudinal axis of the said roller 2 (figure 2).

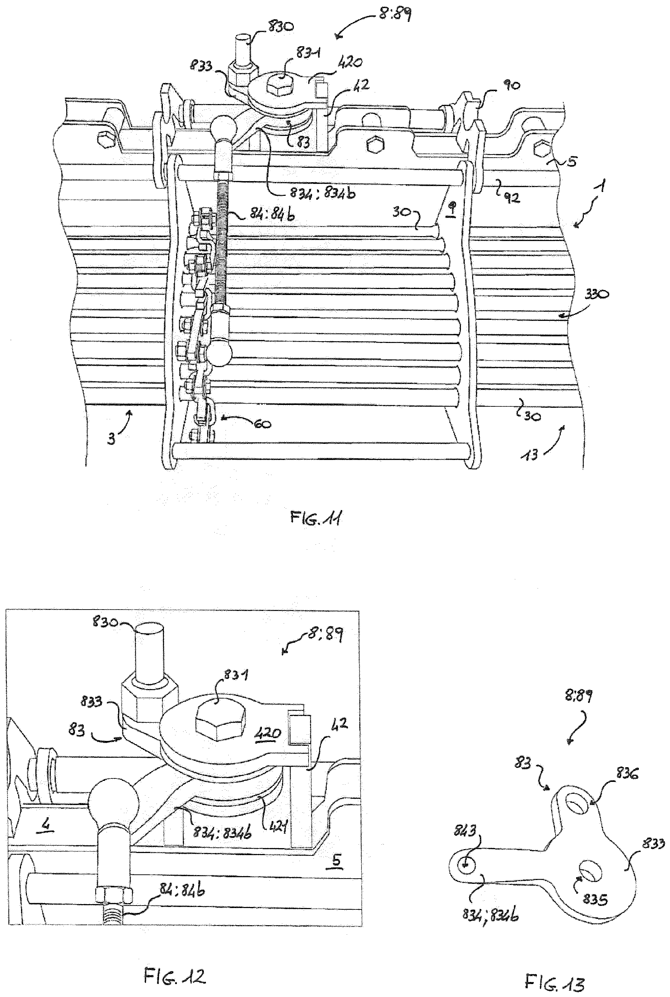

When the regulation system 8 is responsible for regulating the width "*a*" of the exit sections 330, and therefore acts as a regulation system 89 of the grid 3, the cam 13 provides for a second portion 834, herein indicated with 834b, substantially flat, while said actuator 84, herein indicated with 84b, preferably comprises a tie-rod 84b or a rod or the like (Figures 11, 12, 13).

In such case, the second portion 834b is arranged substantially orthogonal with respect to the appendix whereon the hole 836 is made and is provided with a through hole 843.

The tie-rod 84b has one end constrained to said second portion 834b, by means of appropriate locking means and said through hole 843, and the other end appropriately constrained, by means of per se known locking means, to the control lever 61 of the said kinematics 60 or, in general, to a lever that controls the regulation of the width "a" of the exit sections 330.

Once the components of the regulation system 89 of the grid 3 have been arranged on the crosspiece 4 and on the breaking device 5, there is provided that:
- the cam 83 is integral with the crosspiece 4 via the support 42;
- the first portion 833 of the cam 83 may rotate under the action of the wheels 820;
- the second portion 834b is constrained to one end of the tie-rod 84b;
- the tie-rod 84b, appropriately constrained to the control lever 61, may operate the kinematics 60 and consequently regulate/modify the orientation of the rod-like elements 30.

By acting on the first portion 833 of the cam 83, said cam 83 rotates and with it the second portion 834b which, according to the rotation direction, acts on the tie-rod 84b increasing or reducing said amplitude "a".

Having described the regulation system 8 in the components and possible executive variants thereof, its operation is now illustrated.

It is specified and summarised/reiterated that, in general:
- the regulation of at least one operating parameter occurs with the sheller 1 in operation, i.e., with the shelling assembly 13 rotating;
- the control bar 80, the support shaft 81, as well as the cursor 82, are substantially stationary and do not rotate together with the shelling assembly 13;
- the cam 83 and the actuator 84, being directly or indirectly constrained to the crosspiece 4, rotate together with the shelling assembly 13, in particular according to said crosspiece 4;
- the position of the cam 83 along the crosspiece 4 and the position of the relative cursor 82 along the support shaft 81 are chosen so that, during the rotation of the crosspiece 4, the pin 830 of the cam 83 may:
   - transit and cross the opening 821 cooperating with the wheels 820 during the regulation step;
   - transit and cross the opening 821 without said pin 830 hitting the wheels 820 at the end of the regulation procedure.

It should be noted that:
- the cursor 82 does not rotate together with the shelling assembly 13, but may slide along the support shaft 81;
- the cam 83 and the actuator 84 rotate together with the shelling assembly 13, but are irremovably fixed to said crosspiece 4,
and how such relative movements of the parts enable to implement the regulation of at least one operating parameter by means of the regulation system 8 according to the present invention.

It is specified that the position of the cam 83 and the position of the relative cursor 82 may be modified as needed, for example according to the dimensions of the sheller or the number of regulation systems 8 provided.

It should now be considered, with respect to a work configuration in which the sheller 1 is in operation and the pin 830 passes through the opening 821 without interference at each revolution of the shelling assembly 13, to proceed to regulate an operating parameter of said sheller 1.

In such case, the regulation procedure provides for the following possible steps:
- the user, by means of the operating means 800, acts on the control bar 80, translating the cursor 82 along the support shaft 81, until reaching/obtaining the desired regulation, possibly indicated by the graduated scale 801;
- while the cursor 82 slides along the support shaft 81, the cam 83 rotates together with the crosspiece 4 and the pin 830 thereof, by virtue of the sliding of the cursor 82, hits one of the wheels 820, undergoing a thrust;
- the thrust of the wheel 820 exerted on the pin 830, by virtue of the locking means 831 which substantially acts as a rotation axis, forces the cam 83 to rotate and with it the second portion 834, 834a, 834b;
- the rotation of the second portion 834, 834a, 834b, via the cooperation of said second portion 834, 834a, 834b with the respective actuator 84, 84a, 84b, is converted into a translation:
   - substantially vertical, adapted to approach/move away the breaking device 5 to/from the roller 2, when said regulation system 8 comprises the regulation system 88 of the conveying zone 520;
   - substantially horizontal, adapted to regulate the width "a" of the exit sections 330 of the grid 3, when said regulation system 8 comprises the regulation
   system 89 of the grid 3.

It is clear that according to the sliding direction of the cursor 82, the pin 830 cooperates substantially with only one of the wheels 820 provided.

It should be noted that rotation of the cam 83 means a partial rotation or a fraction of a turn of the same cam 83, the extent of such rotation being related to the thrust exerted by the wheel 820 on the pin 830 and to the friction exerted by the interference elements 421.

It is therefore clear that, according to the extent of the regulation to be implemented, in order to complete the same regulation of all the regulation systems 8, 88, 89 provided, in particular of the respective rotating groups, one or more turns of the shelling assembly 13 may be necessary.

As anticipated, in fact, in order to implement the regulation of the regulation system 8 according to the present invention, the sheller 1 must be in operation.

In fact, the regulation system 8 uses the movement of the shelling assembly 13 to implement the regulation of one or more operating parameters, thus avoiding the machine downtime and safeguarding the production times.

It is clear that the regulation system 8 according to the present invention allows regulating one or more operating parameters of the sheller 1 according to the characteristics of the fruit to be shelled, without requiring the dismantling and/or replacement of the parts thereof, such as the grid 3, or the machine downtime.

Advantageously, in fact, such regulation is implemented with the sheller 1 in operation, avoiding machine downtimes or interruptions of the production activity.

The sheller 1 may be regulated so as to crush:
- fruit of homogeneous size, said fruit having been previously sifted and selected according to their dimensions;
- fruit of heterogeneous size, or mixed sizing;
and the possible adjustment/adaptation of the set regulation as well as the same regulation may be carried out with the sheller 1 in motion.

It is clear that several variants of the invention described above are possible for the man skilled in the art, without departing from the novelty scopes of the inventive idea, as well as it is clear that in the practical embodiment of the invention the various components described above may be replaced with technically equivalent ones.

For example, in order to increase the hourly production, nothing prevents feeding two or more shelling assemblies 13 with a single loading hopper 11 arranged as needed, for example in parallel to each other.

The sheller 1 may also be equipped with a collection device 6 capable of accommodating and possibly conveying the mass of product coming out of the grid 3.

Said collection device 6 is preferably arranged below the roller 2 and the grid 3, so as to accommodate the mass of product that falls there by gravity, and may be made in the form of a tank or similar containers.

Furthermore, the sheller 1 may include a cleaning system 7 of the grid 3 adapted to remove possible shell fragments stuck between the rod-like elements 30 and that partially occlude the respective exit section 330.

According to a possible executive variant, said cleaning system 7 may comprise:
- a rolling volume 711, wherein a plurality of rolling bodies 70 are confined, but free to move and roll;
- containment means 71 capable of closing said rolling volume 711 and confining thereto said plurality of rolling bodies 70;
- said plurality of rolling bodies 70 capable of moving and/or rolling along the grid 3.

When the sheller 1 is in operation, the grid 3 is rotated and the cooperation between grid 3 and rolling bodies 70 causes said rolling bodies 70, rolling and/or hitting the grid 3, to hit the fragments stuck in the grid 3, freeing it.

For further details relating to the cleaning system 7 and to the operation thereof, or in general to the shelling machine 1, reference should be made to the Italian patent applications No. 102022000005429 and No. 102022000020757 in the name of the same Applicant.

## Claims

1. Shelling machine (1) for shell dried fruit comprising:
- at least one support frame (10),
- at least one shelling assembly (13) comprising:
- at least one roller (2) keyed or provided with a shaft (21) rotated with respect to the longitudinal axis thereof by driving means (22),
- at least one sorting grid (3) defined by a plurality of rod-like elements (30) arranged about said roller (2) at regular intervals, so as to be parallel and equidistant from each other and to define exit sections (330) that allow the mass of product to be evacuated,
- at least one shell breaking device (5) rotated by driving means so as to rotate about said roller (2), said at least one breaking device (5) cooperating with said roller (2) in order to crush the shells of the fruit,
- at least one regulation system (8) of at least one operating parameter of said shelling machine (1) whose regulation is a function of the size/gauge of the fruit to be shelled, **characterised in that** said regulation system (8)
comprises:
- at least one control bar (80), that may be operated by at least one operating means (800);
- at least one support shaft (81) arranged externally to said shelling assembly (13) and constrained to said frame (10) so as to be fixed and irremovable;
- at least one cursor (82) slidingly fixed to said support shaft (81) and capable of translating along said shaft (81) under the action of said control bar (80) to which it is connected;
- at least one cam (83) fixed to and integral with a crosspiece (4) which acts as a support for said at least one breaking device (5);
- at least one actuator (84) capable of transmitting the movement imparted by said cam (83) to an element of said shelling machine (1) which operates in accordance with said operating parameter.

2. Shelling machine (1) according to the previous claim, wherein said cursor (82) is shaped and made so as to act as a support for at least two wheels (820).

3. Shelling machine (1) according to the previous claim, wherein said wheels (820) comprise bearings, idler wheels or the like and are placed side by side to each other so as to define a gap (821) wherein a pin (830) arranged and fixed to said cam (83) is capable of transiting, said pin (830) being capable of:
- cooperating with at least one wheel (820), crossing said opening (821), during the regulation procedure;
- crossing said opening (821) without interference, once the regulation has been completed.

4. Shelling machine (1) according to any previous claim, wherein said cam (83) is shaped and made so as to be able to:
- be constrained to said crosspiece (4) via a support (42) and a locking means (831) capable of preventing its translation, but allowing its rotation;
- act as a support for said pin (830);
- control the movement of said actuator (84) in response to the movement imparted by said cursor (82) via said control bar (80).

5. Shelling machine (1) according to the previous claim, wherein said cam (83) identifies:
- a first portion (833) provided with a through hole (835) for the passage of said locking means (831), and a hole (836) intended for fixing said pin (830), said first portion (833) being intended to cooperate with said cursor (82);
- a second portion (834), integral with and projecting from said first portion (833), intended to cooperate with said actuator (84) so as to transmit to it the command received from said cursor (82).

6. Shelling machine (1) according to any previous claim, wherein said regulation system (8) is provided with a Vernier or a graduated scale (801).

7. Shelling machine (1) according to any previous claim, wherein said shelling machine (1) may comprise:
- at least one regulation system (8; 88) of the conveying zone (520) dedicated to regulate the distance between said roller (2) and said breaking device (5); and/or
- at least one regulation system (8; 89) of said grid (3) dedicated to regulate the width of the exit sections (330) of said grid (3).

8. Shelling machine (1) according to the previous claim, wherein said regulation system (88) of the conveying zone (520) provides for:
- the second portion (834a) of said cam (83) shaped like a helicoid or a curvilinear, rectilinear, inclined section or the like,
- said actuator (84) comprising one bracket (84a) constrained to said breaking device (5).

9. Shelling machine (1) according to the previous claim, wherein said bracket (84a) is shaped as a "C" or "U" or the like so as to provide two arms between which a cavity is defined wherein locking means (840) are housed, said bracket (84a) being fixed to the breaking device (5) via said locking means (840).

10. Shelling machine (1) according to the previous claim, wherein said bracket (84a) is capable of receiving, at least partially, said second portion (834a), said second portion (834a) being capable of insisting either on the upper arm or on the lower arm of said bracket (84a), according to the rotation movement of said cam (83), so as to push downwards or pull upwards said breaking device (5).

11. Shelling machine (1) according to the previous claims from 7 onwards, wherein said shelling machine (1) provides for at least two regulation systems (88) of the conveying zone (520), said regulation systems (88) of the conveying zone (520) being substantially equal to each other, but with the respective cursors (82) arranged respectively in the proximity of the opposite ends of the said support shaft (81).

12. Shelling machine (1) according to at least the previous claim 7, wherein said regulation system (89) of said grid (3) provides for:
- the second portion (834b) of said cam (83) substantially flat,
- said actuator (84) comprising one tie-rod (84b) or the like, said tie-rod (84b) having one end constrained to said second portion (834b) and the other end to a lever which controls the regulation of the width of said exit sections (330).

## Patentansprüche

1. Schälmaschine (1) für Trockenfrüchte mit Schale, umfassend:
- mindestens einen Stützrahmen (10),
- mindestens eine Schälbaugruppe (13), umfassend:
- mindestens eine Walze (2), die mit einer Welle (21) verkeilt oder versehen ist, die bezüglich der Längsachse davon durch Antriebsmittel (22) gedreht wird,
- mindestens ein Sortiergitter (3), das aus mehreren stangenförmigen Elementen (30) definiert ist, die in regelmäßigen Abständen um die Walze (2) angeordnet sind, um parallel und gleich weit voneinander entfernt zu sein und um Austrittsbereiche (330) zu definieren, die das Abführen der Produktmasse ermöglichen,
- mindestens eine Schalenbrechvorrichtung (5), die durch Antriebsmittel gedreht wird, um sich um die Walze (2) zu drehen, wobei die mindestens eine Brechvorrichtung (5) mit der Walze (2) zusammenwirkt, um die Schalen der Früchte zu zerdrücken;
- mindestens ein Regelsystem (8) von mindestens einem Betriebsparameter der Schälmaschine (1), dessen Regelung von der Größe/dem Durchmesser der zu schälenden Früchte abhängt,
**dadurch gekennzeichnet, dass**
das Regelsystem (8) umfasst:
- mindestens eine Steuerleiste (80), die durch mindestens ein Betätigungsmittel (800) betätigt werden kann;
- mindestens eine Stützwelle (81), die außerhalb der Schälbaugruppe (13) angeordnet ist und an dem Rahmen (10) befestigt ist, um fixiert und unabnehmbar zu sein;
- mindestens einen Läufer (82), der verschiebbar an der Stützwelle (81) fixiert ist und in der Lage ist, sich entlang der Welle (81) unter der Einwirkung der Steuerleiste (80), mit der er verbunden ist, zu verschieben;
- mindestens einen Nocken (83), der an einem Querträger (4) fixiert und mit diesem einstückig ist, der als eine Stütze für die mindestens eine Brechvorrichtung (5) dient;
- mindestens ein Stellglied (84), das in der Lage ist, die Bewegung, die von dem Nocken (83) erzeugt wird, auf ein Element der Schälmaschine (1) zu übertragen, das in Übereinstimmung mit dem Betriebsparameter arbeitet.

2. Schälmaschine (1) nach dem vorhergehenden Anspruch, wobei der Läufer (82) geformt und erstellt ist, um als Stütze für mindestens zwei Räder (820) zu dienen.

3. Schälmaschine (1) nach dem vorhergehenden Anspruch, wobei die Räder (820) Lager, Umlenkräder oder dergleichen umfassen und nebeneinander platziert sind, um einen Spalt (821) zu definieren, worin ein Stift (830), der an dem Nocken (83) angeordnet und fixiert ist, in der Lage ist, sich zu verschieben, wobei der Stift (830) in der Lage ist:
- mit mindestens einem Rad (820), das die Öffnung (821) durchquert, während des Regelvorgangs zusammenzuwirken;
- die Öffnung (821) ungehindert zu durchqueren, sobald die Regelung abgeschlossen ist.

4. Schälmaschine (1) nach einem der vorhergehenden Ansprüche, wobei der Nocken (83) geformt und erstellt ist, um in der Lage zu sein:
- an dem Querträger (4) über eine Stütze (42) und Verriegelungsmittel (831) befestigt zu werden, die in der Lage sind, seine Verschiebung zu verhindern, jedoch seine Drehung zuzulassen;
- als Stütze für den Stift (830) zu dienen;
- die Bewegung des Stellglieds (84) als Antwort auf die Bewegung zu steuern, die von dem Läufer (82) über die Steuerleiste (80) erzeugt wird.

5. Schälmaschine (1) nach dem vorhergehenden Anspruch, wobei der Nocken (83):
- einen ersten Abschnitt (833), der mit einem Durchgangsloch (835) für den Durchgang der Verriegelungsmittel (831) und einem Loch (836) versehen ist, das zur Befestigung des Stifts (830) bestimmt ist, wobei der erste Abschnitt (833) dazu bestimmt ist, mit dem Läufer (82) zusammenzuwirken;
- einen zweiten Abschnitt (834) identifiziert, der mit dem ersten Abschnitt (833) einstückig ist und von diesem vorsteht, der dazu bestimmt ist, mit dem Stellglied (84) zusammenzuwirken, um an es den Befehl zu übertragen, den er von dem Läufer (82) erhalten hat.

6. Schälmaschine (1) nach einem der vorhergehenden Ansprüche, wobei das Regelsystem (8) mit einem Nonius oder einer Strichskala (801) versehen ist.

7. Schälmaschine (1) nach einem der vorhergehenden Ansprüche, wobei die Schälmaschine (1):
- mindestens ein Regelsystem (8; 88) der Förderzone (520), das dazu dient, den Abstand zwischen der Walze (2) und der Brechvorrichtung (5) zu regeln; und/oder
- mindestens ein Regelsystem (8; 89) des Gitters (3) umfassen kann, das dazu dient, die Breite der Austrittsbereiche (330) des Gitters (3) zu regeln.

8. Schälmaschine (1) nach dem vorhergehenden Anspruch, wobei das Regelsystem (88) der Förderzone (520):
- den zweiten Abschnitt (834a) des Nockens (83) vorsieht, der wie ein helicoider oder ein gekrümmter, geradliniger, geneigter Bereich oder dergleichen geformt ist,
- wobei das Stellglied (84) eine Halterung (84a) umfasst, die an der Brechvorrichtung (5) befestigt ist.

9. Schälmaschine (1) nach dem vorhergehenden Anspruch, wobei die Halterung (84a) wie ein "C" oder "U" oder dergleichen geformt ist, um zwei Arme bereitzustellen, zwischen denen ein Hohlraum definiert ist, in dem Verriegelungsmittel (840) untergebracht sind, wobei die Halterung (84a) über die Verriegelungsmittel (840) an der Brechvorrichtung (5) fixiert ist.

10. Schälmaschine (1) nach dem vorhergehenden Anspruch, wobei die Halterung (84a) in der Lage ist, den zweiten Abschnitt (834a) mindestens teilweise aufzunehmen, wobei der zweite Abschnitt (834a) in der Lage ist, entsprechend der Drehbewegung des Nockens (83) entweder am oberen oder am unteren Arm der Halterung (84a) anzuliegen, um die Brechvorrichtung (5) nach unten zu drücken oder nach oben zu ziehen.

11. Schälmaschine (1) nach den vorhergehenden Ansprüchen ab Anspruch 7, wobei die Schälmaschine (1) mindestens zwei Regelsysteme (88) der Förderzone (520) vorsieht, wobei die Regelsysteme (88) der Förderzone (520) im Wesentlichen gleich sind, wobei jedoch die jeweiligen Läufer (82) jeweils in der Nähe der gegenüberliegenden Enden der Stützwelle (81) angeordnet sind.

12. Schälmaschine (1) nach mindestens dem vorhergehenden Anspruch 7, wobei das Regelsystem (89) des Gitters (3):
- den zweiten Abschnitt (834a) des Nockens (83) im Wesentlichen flach vorsieht,
- wobei das Stellglied (84) eine Zugstange (84b) oder dergleichen umfasst, wobei ein Ende der Zugstange (84b) an dem zweiten Abschnitt (834b) und das andere Ende an einem Hebel befestigt ist, der die Regulierung der Breite der Austrittsbereiche (330) steuert.

## Revendications

1. Machine à décortiquer (1) pour fruits séchés en coque comprenant :
- au moins un cadre de support (10),
- au moins un ensemble de décorticage (13) comprenant :
- au moins un rouleau (2) claveté ou muni d'un arbre (21) tournant par rapport à son axe longitudinal par des moyens d'entraînement (22),
- au moins une grille de tri (3) définie par une pluralité d'éléments en forme de tige (30) disposés autour dudit rouleau (2) à intervalles réguliers, de manière à être parallèles et équidistants les uns des autres et à définir des sections de sortie (330) qui permettent d'évacuer la masse de produit,
- au moins un dispositif de broyage de coquilles (5) mis en rotation par des moyens d'entraînement de manière à tourner autour dudit rouleau (2), ledit dispositif de broyage (5) coopérant avec ledit rouleau (2) afin de broyer les coquilles du fruit,
- au moins un système de régulation (8) d'au moins un paramètre de fonctionnement de ladite machine à décortiquer (1) dont la régulation est fonction de la taille/calibre du fruit à décortiquer,
**caractérisé en ce que**
ledit système de régulation (8) comprend :
- au moins une barre de commande (80), qui peut être actionnée par au moins un moyen de commande (800) ;
- au moins un arbre de support (81) disposé à l'extérieur dudit ensemble de décorticage (13) et contraint audit cadre (10) de manière à être fixe et inamovible ;
- au moins un curseur (82) fixé de manière coulissante audit arbre de support (81) et capable de se déplacer le long dudit arbre (81) sous l'action de ladite barre de commande (80) à laquelle il est relié ;
- au moins une came (83) fixée et solidaire d'une traverse (4) qui sert de support à ledit au moins un dispositif de broyage (5) ;
- au moins un actionneur (84) capable de transmettre le mouvement imprimé par ladite came (83) à un élément de ladite machine à décortiquer (1) qui fonctionne conformément audit paramètre de fonctionnement.

2. Machine à décortiquer (1) selon la revendication précédente, dans laquelle ledit curseur (82) est façonné et fabriqué de manière à servir de support à au moins deux roues (820).

3. Machine à décortiquer (1) selon la revendication précédente, dans laquelle lesdites roues (820) comprennent des roulements, des roues libres ou similaires et sont placées côte à côte de manière à définir un espace (821) dans lequel une goupille (830) disposée et fixée à ladite came (83) peut se déplacer, ladite goupille (830) étant capable de :
- coopérer avec au moins une roue (820), traversant ladite ouverture (821), pendant la procédure de régulation ;
- franchir ladite ouverture (821) sans interférence, une fois la régulation terminée.

4. Machine à décortiquer (1) selon toute revendication précédente, dans laquelle ladite came (83) est façonnée et fabriquée de manière à pouvoir :
- être contraint à ladite traverse (4) via un support (42) et un moyen de verrouillage (831) capable d'empêcher sa translation, mais permettant sa rotation ;
- servir de support à ladite goupille (830) ;
- contrôler le mouvement dudit actionneur (84) en réponse au mouvement transmis par ledit curseur (82) via ladite barre de commande (80).

5. Machine à décortiquer (1) selon la revendication précédente, dans laquelle ladite came (83) identifie :
- une première partie (833) munie d'un trou traversant (835) pour le passage desdits moyens de verrouillage (831), et d'un trou (836) destiné à fixer ladite goupille (830), ladite première partie (833) étant destinée à coopérer avec ledit curseur (82) ;
- une seconde partie (834), faisant partie intégrante et faisant saillie de ladite première partie (833), destinée à coopérer avec ledit actionneur (84) afin de lui transmettre la commande reçue dudit curseur (82).

6. Machine à décortiquer (1) selon toute revendication précédente, dans laquelle ledit système de régulation (8) est muni d'un vernier ou d'une échelle graduée (801).

7. Machine à décortiquer (1) selon toute revendication précédente, ladite machine à décortiquer (1) pouvant comprendre :
- au moins un système de régulation (8 ; 88) de la zone de convoyage (520) dédié à la régulation de la distance entre ledit rouleau (2) et ledit dispositif de broyage (5) ; et/ou
- au moins un système de régulation (8 ; 89) de ladite grille (3) dédié à la régulation de la largeur des sections de sortie (330) de ladite grille (3).

8. Machine à décortiquer (1) selon la revendication précédente, dans laquelle ledit système de régulation (88) de la zone de convoyage (520) prévoit :
- la seconde partie (834a) de ladite came (83) ayant la forme d'une hélice ou d'une section curviligne, rectiligne, inclinée ou similaire,
- ledit actionneur (84) comprenant un support (84a) contraint audit dispositif de broyage (5).

9. Machine à décortiquer (1) selon la revendication précédente, dans laquelle ledit support (84a) est en forme de "C" ou de "U" ou similaire afin de fournir deux bras entre lesquels une cavité est définie dans laquelle sont logés des moyens de verrouillage (840), ledit support (84a) étant fixé au dispositif de broyage (5) via lesdits moyens de verrouillage (840).

10. Machine à décortiquer (1) selon la revendication précédente, dans laquelle ledit support (84a) est capable de recevoir, au moins partiellement, ladite seconde partie (834a), ladite seconde partie (834a) étant capable d'appuyer soit sur le bras supérieur, soit sur le bras inférieur dudit support (84a), selon le mouvement de rotation de ladite came (83), de manière à pousser vers le bas ou à tirer vers le haut ledit dispositif de broyage (5).

11. Machine à décortiquer (1) selon les revendications précédentes à partir de 7, dans laquelle ladite machine à décortiquer (1) prévoit au moins deux systèmes de régulation (88) de la zone de convoyage (520), lesdits systèmes de régulation (88) de la zone de convoyage (520) étant sensiblement égaux l'un à l'autre, mais avec les curseurs respectifs (82) disposés respectivement à proximité des extrémités opposées dudit arbre de support (81).

12. Machine à décortiquer (1) selon au moins la revendication 7 précédente, dans laquelle ledit système de régulation (89) de ladite grille (3) prévoit :
- la seconde partie (834b) de ladite came (83) sensiblement plate,
- ledit actionneur (84) comprenant une tige de liaison (84b) ou similaire, ladite tige de liaison (84b) ayant une extrémité contrainte à ladite deuxième partie (834b) et l'autre extrémité à un levier qui contrôle le réglage de la largeur desdites sections de sortie (330).
